# EUROPEAN PATENT APPLICATION

(11) **EP 4 738 923 A2**
(43) Date of publication of application: **06.05.2026**
(21) Application number: 26164557.6
(22) Date of filing: 26.09.2024
(51) Int. Cl.: H04W 36/00

(54) **MEASUREMENT GAP COLLISION WITH KEEP HANDLING**

(30) Priority: 09.10.2023 IN 202341067633
(62) Divisional of application: 24202804.1
(71) Applicant: Nokia Technologies Oy, 02610 Espoo (FI)
(72) Inventor: DALSGAARD, Lars, Oulu (FI); SELVAGANAPATHY, Srinivasan, Bangalore (IN)
(74) Representative: Kolster Oy Ab

(57) **Abstract**

An apparatus configured to: receive, from a serving network, an indication that multiple non-serving network gaps that overlap in time are able to be used substantially simultaneously; detect a gap collision between at least one serving network gap and at least one non-serving network gap; in response to a determination that operation on the at least one serving network gap is required to fulfill at least one requirement associated with the at least one serving network gap, perform operations in the serving network using the at least one serving network gap; and in response to a determination that operation on the at least one serving network gap is not required to fulfill the at least one requirement associated with the at least one serving network gap, perform operations in a non-serving network using the at least one non-serving network gap.

## Description

### TECHNICAL FIELD

The example and non-limiting embodiments relate generally to multiple universal subscriber identity module (MUSIM) gaps and, more particularly, to collisions with regard to MUSIM gaps.

### BACKGROUND

It is known, for MUSIM gaps, for a UE to use multiple MUSIM gaps which collide in time according to a keep solution.

Ogeen Toma, MediaTek inc, 3GPP Draft; R4-2304617; Type discussion; NR_DualTxRx_MUSIM-Core, 20230410 3rd Generation Partnership Project (3GPP), Mobile Competence Centre; 650, route des Lucioles; F-06921 Sophia-Antipolis Cedex; France, Vol: RAN WG4, Nro: Online; 20230417 - 20230426, XP052285824, discusses RRM requirements for MUSIM gaps collision handling.

Xusheng Wei, Vivo, 3GPP Draft; R4-2315212; Type discussion; NR_DualTxRx_MUSIM-Core, 20230927 3rd Generation Partnership Project (3GPP), Mobile Competence Centre; 650, route des Lucioles; F-06921 Sophia-Antipolis Cedex; France, Vol: RAN WG4, Nro: Xiamen, CN; 20231009 - 20231013, XP052523667, discusses issues for collisions between gaps and priority rules for MUSIM gaps.

### SUMMARY

The following summary is merely intended to be illustrative. The summary is not intended to limit the scope of the claims.

In accordance with one aspect, an apparatus comprising: at least one processor; and at least one memory storing instructions that, when executed by the at least one processor, cause the apparatus at least to: receive, from a serving network, an indication that multiple non-serving network gaps that overlap in time are able to be used substantially simultaneously; detect a gap collision between at least one serving network gap and at least one non-serving network gap; in response to a determination that operation on the at least one serving network gap is required to fulfill at least one requirement associated with the at least one serving network gap, perform operations in the serving network using the at least one serving network gap; and in response to a determination that operation on the at least one serving network gap is not required to fulfill the at least one requirement associated with the at least one serving network gap, perform the operations in a non-serving network using the at least one non-serving network gap.

In accordance with one aspect, a method comprising: receiving, with a user equipment from a serving network, an indication that multiple non-serving network gaps that overlap in time are able to be used substantially simultaneously; detecting a gap collision between at least one serving network gap and at least one non-serving network gap; in response to a determination that operation on the at least one serving network gap is required to fulfill at least one requirement associated with the at least one serving network gap, performing operations in the serving network using the at least one serving network gap; and in response to a determination that operation on the at least one serving network gap is not required to fulfill the at least one requirement associated with the at least one serving network gap, performing the operations in a non-serving network using the at least one non-serving network gap.

In accordance with one aspect, an apparatus comprising means for: receiving, from a serving network, an indication that multiple non-serving network gaps that overlap in time are able to be used substantially simultaneously; detecting a gap collision between at least one serving network gap and at least one non-serving network gap; in response to a determination that operation on the at least one serving network gap is required to fulfill at least one requirement associated with the at least one serving network gap, performing operations in the serving network using the at least one serving network gap; and in response to a determination that operation on the at least one serving network gap is not required to fulfill the at least one requirement associated with the at least one serving network gap, performing the operations in a non-serving network using the at least one non-serving network gap.

In accordance with one aspect, a non-transitory computer-readable medium comprising program instructions stored thereon for performing at least the following: causing receiving, from a serving network, of an indication that multiple non-serving network gaps that overlap in time are able to be used substantially simultaneously; detecting a gap collision between at least one serving network gap and at least one non-serving network gap; in response to a determination that operation on the at least one serving network gap is required to fulfill at least one requirement associated with the at least one serving network gap, performing operations in the serving network using the at least one serving network gap; and in response to a determination that operation on the at least one serving network gap is not required to fulfill the at least one requirement associated with the at least one serving network gap, performing the operations in a non-serving network using the at least one non-serving network gap.

In accordance with one aspect, an apparatus comprising: at least one processor; and at least one memory storing instructions that, when executed by the at least one processor, cause the apparatus at least to: receive, from a serving network, a configuration for one or more non-serving network gaps; receive, from the serving network, a configuration for one or more serving network gaps; receive, from the serving network, an indication that multiple non-serving network gaps that overlap in time are able to be used substantially simultaneously; receive, from the serving network, information for handling gap collisions; and perform operations using at least one gap based, at least partially, on the information for handling gap collisions.

In accordance with one aspect, a method comprising: receiving, with a user equipment from a serving network, a configuration for one or more non-serving network gaps; receiving, from the serving network, a configuration for one or more serving network gaps; receiving, from the serving network, an indication that multiple non-serving network gaps that overlap in time are able to be used substantially simultaneously; receiving, from the serving network, information for handling gap collisions; and performing operations using at least one gap based, at least partially, on the information for handling gap collisions.

In accordance with one aspect, an apparatus comprising means for: receiving, from a serving network, a configuration for one or more non-serving network gaps; receiving, from the serving network, a configuration for one or more serving network gaps; receiving, from the serving network, an indication that multiple non-serving network gaps that overlap in time are able to be used substantially simultaneously; receiving, from the serving network, information for handling gap collisions; and performing operations using at least one gap based, at least partially, on the information for handling gap collisions.

In accordance with one aspect, a non-transitory computer-readable medium comprising program instructions stored thereon for performing at least the following: causing receiving, from a serving network, of a configuration for one or more non-serving network gaps; causing receiving, from the serving network, of a configuration for one or more serving network gaps; causing receiving, from the serving network, of an indication that multiple non-serving network gaps that overlap in time are able to be used substantially simultaneously; causing receiving, from the serving network, of information for handling gap collisions; and performing operations using at least one gap based, at least partially, on the information for handling gap collisions.

In accordance with one aspect, an apparatus comprising: at least one processor; and at least one memory storing instructions that, when executed by the at least one processor, cause the apparatus at least to: transmit, to a user equipment, a configuration for one or more non-serving network gaps; transmit, to the user equipment, a configuration for one or more serving network gaps; transmit, to the user equipment, an indication that multiple non-serving network gaps that overlap in time are able to be used substantially simultaneously; and transmit, to the user equipment, information for handling gap collisions.

In accordance with one aspect, a method comprising: transmitting, with a network node to a user equipment, a configuration for one or more non-serving network gaps; transmitting, to the user equipment, a configuration for one or more serving network gaps; transmitting, to the user equipment, an indication that multiple non-serving network gaps that overlap in time are able to be used substantially simultaneously; and transmitting, to the user equipment, information for handling gap collisions.

In accordance with one aspect, an apparatus comprising means for: transmitting, to a user equipment, a configuration for one or more non-serving network gaps; transmitting, to the user equipment, a configuration for one or more serving network gaps; transmitting, to the user equipment, an indication that multiple non-serving network gaps that overlap in time are able to be used substantially simultaneously; and transmitting, to the user equipment, information for handling gap collisions.

In accordance with one aspect, a non-transitory computer-readable medium comprising program instructions stored thereon for performing at least the following: causing transmitting, to a user equipment, of a configuration for one or more non-serving network gaps; causing transmitting, to the user equipment, of a configuration for one or more serving network gaps; causing transmitting, to the user equipment, of an indication that multiple non-serving network gaps that overlap in time are able to be used substantially simultaneously; and causing transmitting, to the user equipment, of information for handling gap collisions.

According to some aspects, there is provided the subject matter of the independent claims. Some further aspects are defined in the dependent claims.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a diagram illustrating features as described herein;
FIG. 3 is a diagram illustrating features as described herein;
FIG. 4 is a diagram illustrating features as described herein;
FIG. 5 is a diagram illustrating features as described herein;
FIG. 6 is a flowchart illustrating steps as described herein;
FIG. 7 is a flowchart illustrating steps as described herein; and
FIG. 8 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- AMF: access and mobility management function
- cRAN: cloud radio access network
- CU: central unit
- DU: distributed unit
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- FR: frequency range
- gNB (or gNodeB): base station for 5G/NR, i.e., a node providing NR user plane and control plane protocol terminations towards the UE, and connected via the NG interface to the 5GC
- GP: (overall) group priority
- I/F: interface
- Ll: layer 1
- LTE: long term evolution
- MAC: medium access control
- MME: mobility management entity
- MUSIM: multiple universal/multi-universal subscriber identity module
- ng or NG: new generation
- ng-eNB or NG-eNB: new generation eNB
- NR: new radio
- N/W or NW: network
- NW-A: network A
- NW-B: network B
- O-RAN: open radio access network
- PDCP: packet data convergence protocol
- PHY: physical layer
- RAN: radio access network
- RF: radio frequency
- RLC: radio link control
- RRC: radio resource control
- RRH: remote radio head
- RS: reference signal
- RU: radio unit
- Rx: receiver
- SDAP: service data adaptation protocol
- SGW: serving gateway
- SIB: system information block
- SMF: session management function
- SSB: synchronization signal block
- Tx: transmitter
- UE: user equipment (e.g., a wireless, typically mobile device)
- UPF: user plane function
- VNR: virtualized network function

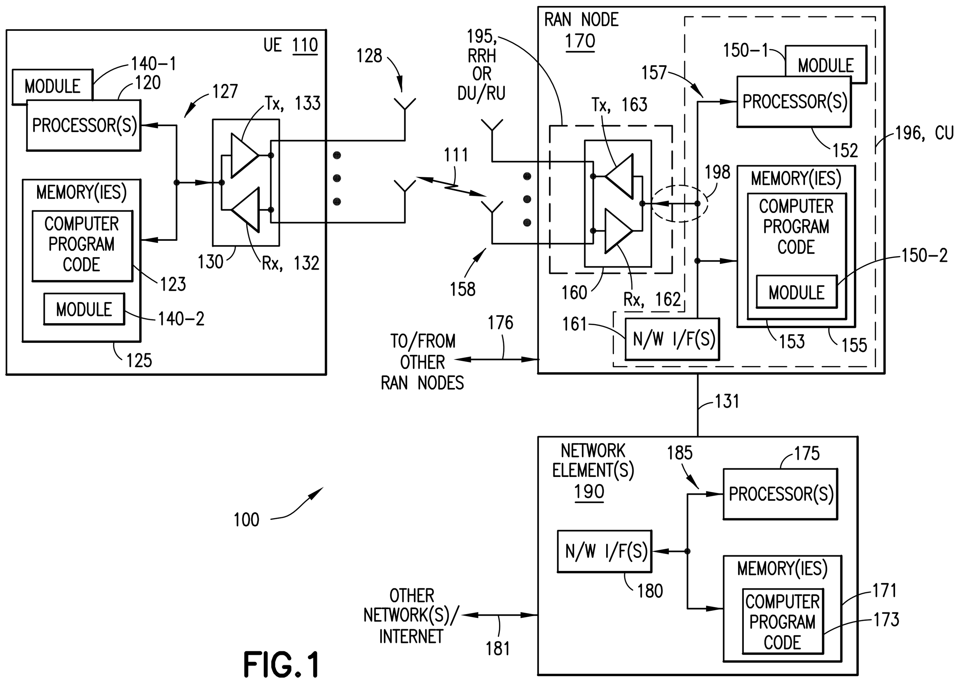

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station, access point, access node, or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. For example, a network may be deployed in a tele cloud, with virtualized network functions (VNF) running on, for example, data center servers. For example, network core functions and/or radio access network(s) (e.g. CloudRAN, O-RAN, edge cloud) may be virtualized. Note that the virtualized entities that result from the network virtualization are still implemented, at some level, using hardware such as processors 152 or 175 and memories 155 and 171, and also such virtualized entities create technical effects.

It may also be noted that operations of example embodiments of the present disclosure may be carried out by a plurality of cooperating devices (e.g. cRAN).

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions, such as controlling the UE 110, RAN node 170, and other functions as described herein.

In general, the various example embodiments of the user equipment 110 can include, but are not limited to, cellular telephones such as smart phones, smartphone devices, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions. Additionally or alternatively, the various example embodiments of the user equipment 110 can include, but are not limited to, large devices that are not typically moved by hand, vehicles (e.g. water, air, and/or land based), and/or devices/modules housed in or integrated in vehicles.

Having thus introduced one suitable but non-limiting technical context for the practice of the example embodiments of the present disclosure, example embodiments will now be described with greater specificity.

Features as described herein may generally relate to multiple universal (multi-universal) subscriber identity module (MUSIM) gaps. MUSIM gaps are allocated by NW-A (e.g. based on a request from the UE) and are allocated to enable the UE to perform operations, for example, measurements and/or paging reception in NW-B. Other types of measurement gaps include concurrent measurement gaps (Type-2 gaps) and legacy (non-concurrent measurement gaps (Type-1 gaps)).

In general, one may categorize MUSIM gaps and non-MUSIM gaps (i.e. measurement gaps) as follows. MUSIM gaps are gaps used for performing actions (for example measurements and/or paging reception) in the 'non-serving' network or network-B. Non-MUSIM gaps are gaps used for performing actions (for example measurements of neighbor cells) in the 'serving' network or network-A.

In the present disclosure, the term "non-serving network gap" may be used to refer to a MUSIM gap. A non-serving network gap may be a gap used to perform actions in a network other than the serving network. In the present disclosure, the term "serving network gap" may be used to refer to a non-MUSIM gap, or measurement gap. A serving network gap may be a gap used to perform actions in the serving network of a UE.

Type-2 gaps were defined in Rel-17 for a UE supporting concurrent measurement gaps. This means a UE which supports being configured with more than 1 measurement gap (non-MUSIM). For this scenario, RAN4 decided to introduce gap priority to address the scenario when/if measurement gaps would collide. A collision between gaps may be when the resource allocation for two or more gaps overlaps or partially overlaps in the time domain.

A UE not supporting type-2 gaps (concurrent gaps) can only be configured with 1 measurement gap pattern (or 2 if the UE supports per frequency range (FR) gaps). These gaps are referred to as Type-1 measurement gaps. Type-1 gaps are non-MUSIM gaps for which 3GPP has not covered priority. Hence, a type-1 gap cannot be assigned any priority.

A measurement gap may be a per-UE measurement gap or a per-FR measurement gap. A per-UE gap is a gap which affects the UE in, for example, all carriers in all FRs. A per-FR gap is a gap which applies only to an FR. Hence, a per-FR gap only applies to carriers in that FR. A UE may operate with 2 FRs: FR1 and FR2.

RAN4 has been discussing MUSIM gaps and how to handle MUSIM gaps when there are collisions between different gaps. In general there can be collisions between MUSIM gaps and also between MUSIM gaps and non-MUSIM gaps. Non-MUSIM gaps could, for example, be gaps allocated by NW-A for performing gaps assisted measurements in NW-A.

MUSIM gap features allow the UE to request gaps from network A (NW-A), which is the serving network, such that the UE can, if the MUSIM gaps are allocated to the UE, for example measure and receive paging from another network B (NW-B) than the serving network. When requested, the NW-A may allocate the requested MUSIM gaps to the UE. And if allocated, the UE may use the allocated gaps, for example, to perform measurements and paging reception from NW-B; however, the actual use is not specified in detail. MUSIM gaps are used, for example, for enabling cell detection, measurements and paging reception in NW-B. Aperiodic MUSIM gaps are, for example, used for system information block (SIB) reception or other activity that does not occur periodically (like measurements and paging). While MUSIM gaps are used for operations in NW-B, it is not specified what each gap is used for.

When the UE requests and the network allocates MUSIM gaps, these may collide in time among the allocated MUSIM gaps. Additionally, the allocated MUSIM gaps may collide with other gaps allocated for other purposes than MUSIM purpose.

The current framework and agreement related to MUSIM gaps includes that, when a Rel-18 UE requests gap priorities for periodic MUSIM gaps, the UE shall always request priorities for all of its requested periodic MUSIM gaps. The current framework and agreement related to MUSIM gaps also includes that, if the network doesn't configure the relative priorities among MUSIM gaps as indicated by the UE, the UE behavior is not specified; this behavior may not be recommended.

It is also understood that the network should not change the relative order of the MUSIM gap priorities compared to the priority requested by the UE.

Additionally, it has been agreed to define two solutions for collision handling between different MUSIM gaps: a priority based solution (i.e., network controls the MUSIM gaps priority); and a "keep" solution (i.e., keep all collided MUSIM gaps).

The priority based approach is rather straight forward. If there is a collision between MUSIM gaps, the gap with the highest priority is kept, while the gap with the lowest priority is dropped. Two gaps are considered as being colliding if they are closer than a given threshold in time; the current agreement is 4ms.

For the so called keep solution, it is agreed to introduce signaling to allow the UE to request to use the "keep solution" collision handling mechanism for requested aperiodic and periodic MUSIM gaps, and for the network to grant to the UE the use of "keep solution". The same request applies for all MUSIM gaps altogether (i.e. one bit indication). The signaling design is determined by RAN2. When the "keep solution" is used, the UE keeps all colliding MUSIM gaps, irrespective of the priority of the MUSIM gaps. In other words, the UE may use multiple MUSIM gaps which may collide in time.

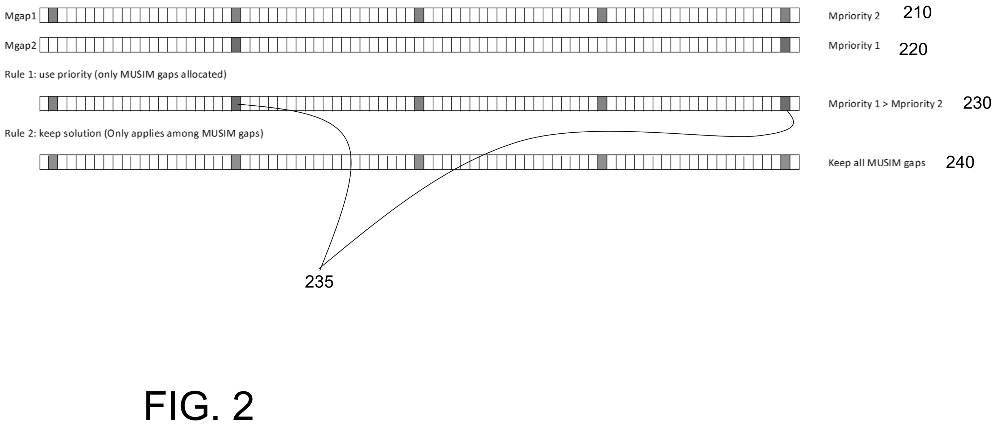

Referring now to FIG. 2, illustrated are examples of the priority based approach (230) and the keep approach (240). In the example of FIG. 2, Mgap1 (210) may have priority Mpriority2. Mgap2 (220) may have priority Mpriority1. According to the priority based approach (230), Mpriority1 > Mpriority2, and so when there is a collision between Mgap1 and Mgap2, the UE applies the priority rule and will drop the MUSIM gap with the lowest priority and keep the MUSIM gap with the highest priority; in this example, the MUSIM gaps of Mgap2 are allocated, for example at 235, as having the higher priority. According to the keep approach (240), the UE may be allowed to keep both MUSIM gaps in case of collision. In this case, no MUSIM gap is dropped; both are kept. Keeping both MUSIM gaps means that the UE will not drop any MUSIM gap in case they collide. Two MUSIM gaps are defined as colliding if they occur closer than -+4ms of each other. Hence, if the MUSIM gap1 occurs 3ms earlier than MUSIM gap 2 (and UE is allowed to use keep solution) the UE will not drop any MUSIM gaps which the UE would otherwise drop (i.e. according to the MUSIM gap priority). If both MUSIM gaps are kept, the UE may perform the MUSIM operation in both gaps.

The current agreement covers the cases when UE is having MUSIM gaps allocated and the UE either uses the priority based solution or the keep-solution.

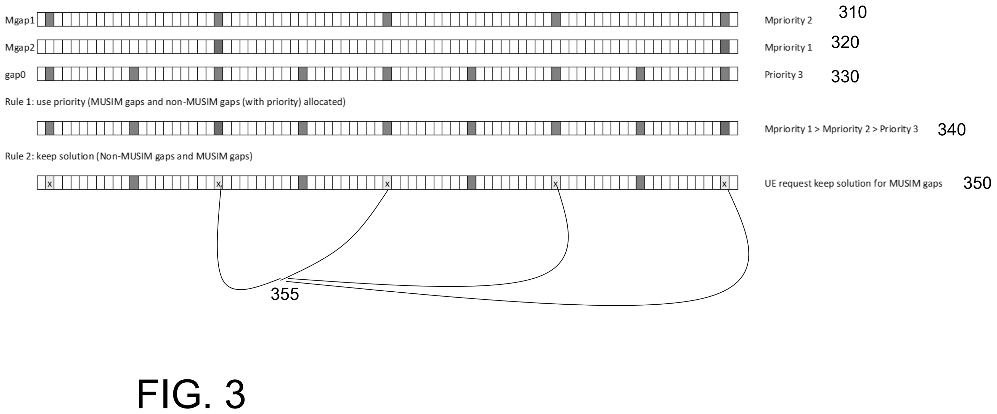

It is possible for a UE to request to use the keep solution, have the request granted by the network, and have a collision occur between MUSIM gap(s) and non-MUSIM gap(s). In other words, the UE may be allowed to keep all allocated MUSIM gaps, and one or more of the MUSIM gaps may collide with, for example, a Type-1 or Type-2 measurement gap. As it may be a common situation that the UE is configured with MUSIM and non-MUSIM gaps (substantially) simultaneously, there is a need to define such a collision scenario when the keep solution is in use. Referring now to FIG. 3, illustrated is an example of such a scenario. Mgap1 (310) may have a priority of Mpriority2. Mgap2 (320) may have a priority of Mpriority1. gap0 (330) may have a priority of Priority3.

In the example of 340, illustrated is the scenario where the UE is allocated both MUSIM gaps and non-MUSIM gaps. In this scenario, the UE is allocated with priorities for all the allocated gaps. The assumption is that the MUSIM gaps have a higher priority than the non-MUSIM gaps, and MUSIM gap 2 (Mgap2) (320) has higher priority than MUSIM gap 1 (Mgap1) (310). In this scenario, there is no problem in deciding which gap is to be used on the UE side and which gap is to be dropped by the UE (Mpriority1 > Mpriority2 > Priority3). Hence, the UE behavior is clear.

In the example of 350, illustrated is the scenario where the UE has requested and has been granted use of the keep-solution. If the UE is also allocated with non-MUSIM gaps, it is unclear what the UE should do in case a non-MUSIM gap collides with a MUSIM gap because the keep-solution only covers MUSIM gaps (e.g. at 355). Hence, there is no definition or specified UE behavior.

Example embodiments of the present disclosure may relate to MUSIM gaps, non-MUSIM gaps, and how they may work together if MUSIM gaps and non-MUSIM gaps collide while the keep solution is implemented.

### Network Solution

Unless clear rules are defined for the described collision scenarios, the network may not allocate the keep-solution even if the UE requests the keep-solution; unless clear rules are specified, the UE requirements would be 'no requirements defined' or similar.

In an example embodiment, if the UE is configured by the network with the MUSIM keep behavior, then the UE may determine a group priority of MUSIM gaps and a group priority of non-MUSIM gaps: based on the existing individual gap priorities of the gaps in each group (e.g. the group priority is the highest priority in each group), OR based on a network indication, OR based on a combination of the above two (e.g. network signals to the UE to use the max or min priority of each group as the group priority). If a MUSIM gap(s) collides in time with a non-MUSIM gap(s), then the UE may drop the gap(s) which has a lower group priority.

In an example embodiment, where there is a collision between MUSIM gaps and Type-2 gaps with the keep-solution implemented, the priority based solution may be used between all MUSIM gaps and all Type-2 gaps.

In an example embodiment, priority may be given to the MUSIM gap group (= 1 priority may be given for representing the priority of all MUSIM gaps allocated) and assigned priorities for non-MUSIM gaps (assume Type-2). In an example embodiment, a priority may be assigned for all MUSIM gaps (i.e. MUSIM gap group). This group priority may be used as a priority against type-2 gap priorities. The priority assigned to the group of MUSIM gaps may be compared to the priority(ies) of Type-2 gap(s).

In an example embodiment, if the MUSIM gap group priority is higher than the highest non-MUSIM gap priority (e.g. highest), the UE may keep all MUSIM gaps.

In an example embodiment, the MUSIM gap group priority may be based on the highest priority among the MUSIM gaps.

In an example embodiment, the MUSIM gap group priority may be based on the lowest priority among the MUSIM gaps. Whether to use highest/lowest priority may be network signaled.

In an example embodiment, the MUSIM gap group priority may be explicitly assigned, for example by the network.

In an example embodiment, priority may be given to the non-MUSIM group (assuming Type-2 gaps) (= 1 priority may be given for representing the priority of all non-MUSIM gaps allocated).

In an example embodiment, if the non-MUSIM gap group priority is higher than the highest MUSIM gap priority (e.g. highest) the UE may keep all non-MUSIM gaps.

In an example embodiment, the non-MUSIM gap group priority may be based on the highest priority among the non-MUSIM gaps.

In an example embodiment, the non-MUSIM gap group priority may be based on the lowest priority among the non-MUSIM gaps. Whether to use the highest or lowest priority may be network signaled.

In an example embodiment, the non-MUSIM gap group priority may be explicitly assigned, for example by the network.

In an example embodiment, for all the above, the network may indicate 'use highest/lowest' from each group (i.e. 4 combos).

In an example embodiment, if there is a collision between MUSIM gaps and Type-1 gaps with the keep-solution, the same principles as described for Type-2 may be used, except the network may explicitly assign a priority for (all) type-1 gaps when the keep solution is in use.

In an alternative example embodiment, when there is collision between MUSIM gaps and Type-1/Type-2 gaps and the keep solution is in use, the network may assign a group priority. In an example embodiment, a group priority for all MUSIM gaps may be assigned when the keep-solution is in use. In an example embodiment, a group priority for all non-MUSIM gaps may be assigned when the keep-solution is in use. This may also be true for Type-1 gaps (e.g. when the network or UE does not support Type-2 gaps). In an example embodiment, the network may assign a group priority for non-MUSIM gaps no matter if these are type-1 or type-2 gaps.

In an alternative example embodiment, the UE may be configured by the network with the MUSIM keep behavior, and the UE may receive an indication from the network, where the indication may have at least one of the following values: keep all MUSIM gaps; keep all non-MUSIM gaps; or keep all gaps. The configuration for using the keep behavior/solution and the indication of which gaps to keep/use may optionally be the same message. If a MUSIM gap(s) collides in time with a non-MUSIM gap(s), then the UE may keep/use (= does not drop) the MUSIM gap(s) or keep/use the non-MUSIM gap(s) or keep/use both the MUSIM gap(s) and the non-MUSIM gap(s) based on the value of the received indication.

In an alternative example embodiment, the network may indicate which measurement gap group the UE shall keep in the keep indication grant (1 or 2 bit indication). This may be achieved by including a common parameter in MUSIM-Gap-config that includes a single Flag: Keep-All/Keep-MUSIM-only. If Keep-All is received, the UE may keep both MUSIM and non-MUSIM configuration. If Keep-MUSIM-only is configured, the UE may drop the non-MUSIM gaps. If this parameter is not configured during collision, only non-MUSIM-gaps may be kept, and MUSIM gaps may be dropped.

In an example, the network (or UEs) may not support type-2 gaps. From the network side, as it is NW-A which assigns the MUSIM gaps and NW-A which is impacted (negatively) by the MUSIM gaps, it seems reasonable that if NW-A assigns MUSIM gaps to the UE, NW-A operations may be favored. Hence, non-MUSIM gaps may take priority over MUSIM gaps in case of collision.

In an example embodiment, the network may indicate to keep all MUSIM gaps.

In an example embodiment, the network may indicate to keep all non-MUSIM gaps.

In an example embodiment, the network may indicate to keep all gaps. This solution may be used with both Type-2 and Type-1 non-MUSIM gaps.

In an example embodiment, RAN2 signaling may not explicitly introduce group priority. Instead, the collision behavior may be explicitly controlled by this flag.

Example embodiments of the present disclosure may be realized with and/or without signaling assistance.

### UE Solution

The UE behavior is not explicitly defined in 3GPP. Hence, if the network grants the use of the keep solution and there are collisions, RAN4 will define no requirements. In one aspect this may mean that no MUSIM gap related requirements will apply, if the keep solution is granted and there are collisions between MUSIM gaps and non-MUSIM gaps. In another aspect this may mean that no non-MUSIM gap related requirements will apply, if the keep solution is granted and there are collisions between MUSIM gaps and non-MUSIM gaps.

However, RAN4 will specify that the current requirements related to non-MUSIM gaps measurement requirements still applies even when MUSIM gaps are configured with keep solution and there are collisions. In an example embodiment, nothing may be defined by RAN4, but the UE may still pass all test cases related to gap assisted measurement requirements even if the UE has MUSIM gaps allocated and keep-solution is granted. It may then be up to the UE implementation to allocate enough of the colliding gaps to non-MUSIM related measurements to ensure that the non-MUSIM related measurement requirements are fulfilled. Examples of non-MUSIM related measurement requirements may include measurement requirements performed in Network-A, either gap assisted or not. Examples of non-MUSIM related measurement requirements may include any type of measurement, for example positioning measurements.

In an alternative example embodiment, the keep solution may be global and also apply beyond the MUSIM gaps. Hence, if the keep solution is granted, the UE may keep all MUSIM gaps - including when collisions between MUSIM gaps and non-MUSIM gaps occurs.

In an example embodiment, where there is a collision between MUSIM gaps and Type-2 gaps with the keep-solution implemented, the priority based solution may be used (e.g. between all MUSIM gaps and all Type-2 gaps). In an example embodiment, priority may be assigned for the MUSIM gaps group (= 1 priority is given for representing the priority of all MUSIM gaps allocated) and for the non-MUSIM gaps (assume Type-2). If the MUSIM gap group priority is higher than the highest non-MUSIM gap priority (e.g. highest), the UE may keep all MUSIM gaps. In an example embodiment, the MUSIM gap group priority may be based on the highest priority among the MUSIM gaps. In an example embodiment, the MUSIM gap group priority may be based on the lowest priority among the MUSIM gaps. Whether to use highest/lowest priority may be network signaled. In an example embodiment, the MUSIM gap group priority may be explicitly assigned, for example by the network.

In an example embodiment, the network may explicitly signal to the UE to use gap-grouped based priority together with getting the grant for using the requested keep solution. The network may indicate to the UE to use the highest priority among MUSIM gaps and among non-MUSIM gaps (type-2) as the MUSIM gap group priority and non-MUSIM gap priority, respectively.

In an example, the following priority assignment may be assumed (P1 = highest priority):
MUSIM gaps: Mgap1: P1; Mgap2: P3
Non-MUSIM gaps: Gap1: P2; Gap2: P4
Gap group priority: MUSIM gaps: GP1; Non-MUSIM gaps: GP2
GP may mean overall group priority. Hence, in this example where the UE has requested and network has granted the keep solution, if there are collisions between any MUSIM gap and any non-MUSIM gap, the priority of the MUSIM gap is higher than that of the non-MUSIM gap (GP1 > GP2). Hence, the UE may keep the MUSIM gap.

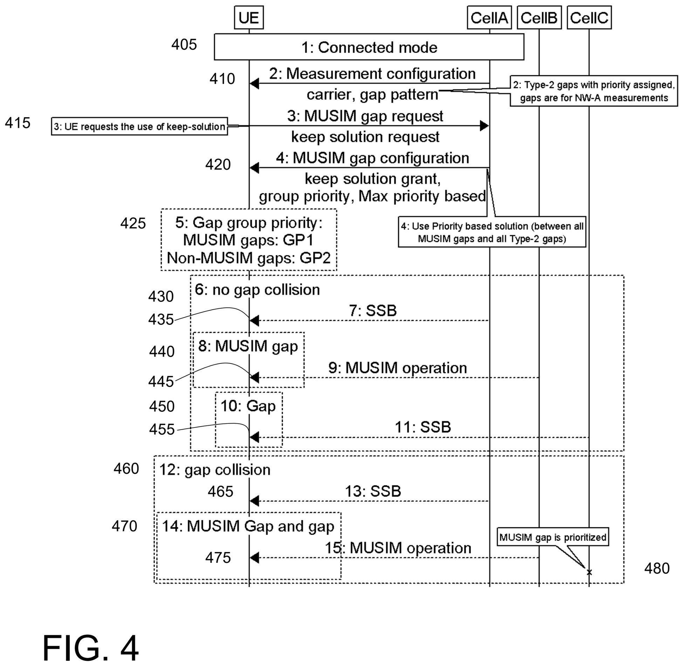

Referring now to FIG. 4, illustrated is an example of collision between MUSIM gaps and Type-2 gaps, with signaling according to example embodiment(s) of the present disclosure. In FIG. 4, CellA and CellC are both cells in network A. CellC is a cell in network B.

At 405, it is assumed that the UE is in connected mode, where the UE has been configured with a measurement configuration for performing network A measurements (steps 1 and 2). At 410, CellA may transmit, to the UE, a measurement configuration, which may comprise an indication of a carrier, an indication of a gap pattern, etc. The measurement configuration may also comprise an indication of Type-2 gaps with priority assigned, which may be for NW-A measurements. At 415, the UE may transmit, to CellA, a request for MUSIM gaps to be allocated for performing MUSIM operations in network B. The UE may also request to use the keep solution. At 420, the network may allocate one or more of the requested MUSIM gaps and may also grant to the UE the use of the keep-solution. Additionally, the network may request for the UE to use gap group priority using the max priority based solution (e.g. between all MUSIM gaps and all Type-2 gaps). At 425, the UE may select the highest priority among the MUSIM gaps and assign that as the MUSIM gap group priority. Additionally, the UE may select the highest priority among the non-MUSIM gaps and assign that as the non-MUSIM gap group priority. Next, the UE may evaluate the group priority to be used with the keep solution. In this case, the highest group priority is the MUSIM group priority. This means that, in case of gap collisions between MUSIM gaps and non-MUSIM gaps, the UE will keep the MUSIM gaps.

In a scenario in which there are no gap collisions between MUSIM gaps and non-MUSIM gaps (430), the UE may measure serving cell (CellA) and CellC (for example an inter-frequency carrier from Network A) in steps 7 (435) and 11 (455). Additionally, the UE may perform the MUSIM operation in step 9 (445).

At 435, the CellA may transmit, to the UE, a synchronization signal block (SSB). At 440, a MUSIM gap may occur. During the allocated MUSIM gap, CellB may transmit, to the UE, a MUSIM operation. At 450, a non-MUSIM gap may occur. During the non-MUSIM gap, CellC may transmit, to the UE, SSB.

In a scenario in which there are collisions between MUSIM gaps and non-MUSIM gaps (460), the UE may measure serving cell (CellA) in steps 13 (465). Additionally, the UE may perform the MUSIM operation in step 15 (475). However, due to the priority, the UE may not perform any actions which would otherwise have been scheduled in the non-MUSIM gap on, for example, CellC - due to this gap having lower group priority.

At 465, CellA may transmit, to the UE, SSB. At 470, both a MUSIM gap and a non-MUSIM gap may be allocated. At 475, CellB may transmit, to the UE, a MUSIM operation during the MUSIM gap. The MUSIM gap may be prioritized; accordingly, at 480, SSB from CellC may not be received by the UE during the non-MUSIM gap.

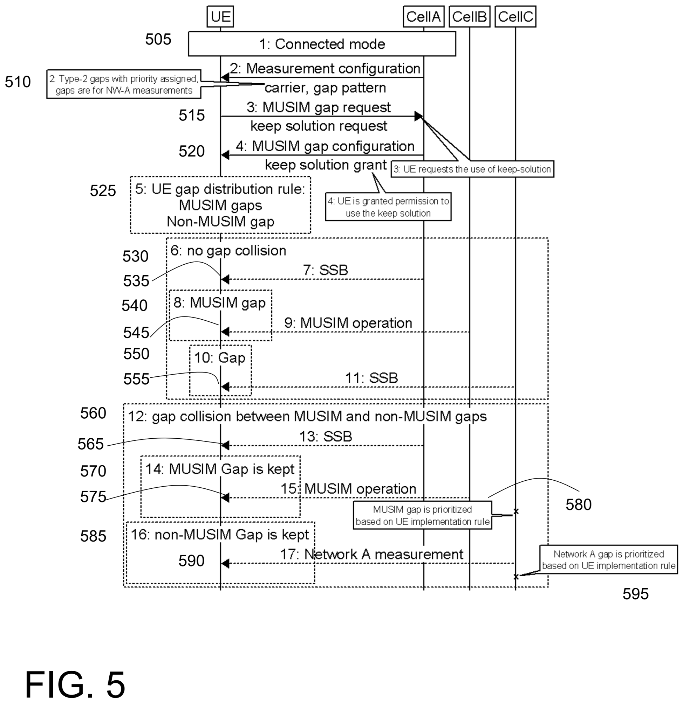

Referring now to FIG. 5, illustrated is an example of a collision between MUSIM gaps and Type-2 gaps according to example embodiments of the present disclosure. In FIG. 5, CellA and CellB are both cells in network A. CellC is a cell in network B.

In the example of FIG. 5, the UE behavior is not explicitly defined in 3GPP. Hence, if the network grants the use of the keep solution and there are collisions, RAN4 will define no UE requirements. In the example of FIG. 5, RAN4 will specify that the current requirements related to non-MUSIM gaps measurement requirements still apply, even when MUSIM gaps are configured with the keep solution and there are collisions. It may be left to the UE implementation exactly how to distribute the keep solution rule in terms of which gaps are kept (MUSIM or non-MUSIM gaps) and which are not.

At 505, it is assumed that the UE is in connected mode, where the UE has been configured with a measurement configuration for performing network A measurements (steps 1 and 2). At 510, CellA transmits, to the UE, a measurement configuration, which may comprise an indication of a carrier and an indication of a gap pattern. The measurement configuration may comprise an indication of Type-2 gaps with priority assigned and an indication that the gaps are for NW-A measurements. At 515, the UE may request MUSIM gaps to be allocated for performing MUSIM operations in network B. The UE may also request use of the keep-solution. At 520, the network may allocate one or more of the requested MUSIM gaps and may also grant the UE the use of the keep-solution. At 525, based on the UE implementation, the UE may detect any collisions between MUSIM gaps and non-MUSIM gaps. The UE may distribute the non-MUSIM gaps in a way such that the UE may still at least fulfill the network-A gap assisted measurement requirements.

In a scenario in which there are no gap collisions between MUSIM gaps and non-MUSIM gaps (530), the UE may in steps 7 (535) and 9 (545) perform the MUSIM operations within the MUSIM gap, while in step 11 (555) the UE may perform the network-A non-MUSIM gap related measurements.

At 535, CellA may transmit, to the UE, SSB. At 540, a MUSIM gap may occur. During the allocated MUSIM gap, at 545 CellB may transmit, to the UE, a MUSIM operation. At 550, a non-MUSIM gap may occur. During the allocated non-MUSIM gap, at 555 CellC may transmit, to the UE, SSB.

In a scenario in which there are collisions between MUSIM gaps and non-MUSIM gaps (560), because the UE has been granted the use of the keep solution, the UE may weight/determine which operation to perform at each gap collision occasion. At 565, CellA may transmit, to the UE, SSB.

In step 14 (570) and 15 (575), the UE algorithm may decide that performing the MUSIM gap operations may be done while the UE is still able to ensure the fulfillment of the network A gap assisted measurement requirements. Hence, even if the UE does not prioritize network A measurements in step 14 (570) and 15 (575), this may not impact the network A gap assisted measurement performance. At 570, the MUSIM gap may occur. At 575, CellB may transmit, to the UE, a MUSIM operation during the MUSIM gap. At 580, the MUSIM gap may be prioritized based on one or more UE implementation rules.

In step 16 (585) and 17 (590), the UE may decide that network A gap assisted measurements needs to be performed to ensure that the network A gap assisted measurement requirements can be ensured and fulfilled according to the existing requirements. At 585, the non-MUSIM gap may occur. At 590, CellC may transmit, to the UE, a network A measurement during the non-MUSIM gap. At 595, the network A gap may be prioritized based on one or more UE implementation rules.

In an example embodiment, the UE of FIG. 5 may be a smartphone or smartphone device.

A technical effect of example embodiments of the present disclosure may be to enable a UE to pass any defined test case testing UE gap assisted measurement requirements.

A technical effect of example embodiments of the present disclosure may be to ensure that even if the UE is granted permission to use the keep solution, and there are collisions between the MUSIM gaps and the non-MUSIM gaps, the UE non-MUSIM gap assisted measurement requirements may be fulfilled, for example without any network assistance signaling. How to distribute the gap between MUSIM operations and non-MUSIM measurements is left for UE implementation.

A technical effect of example embodiments of the present disclosure may be to ensure that the UE may still fulfill the network A gap assisted measurement requirements.

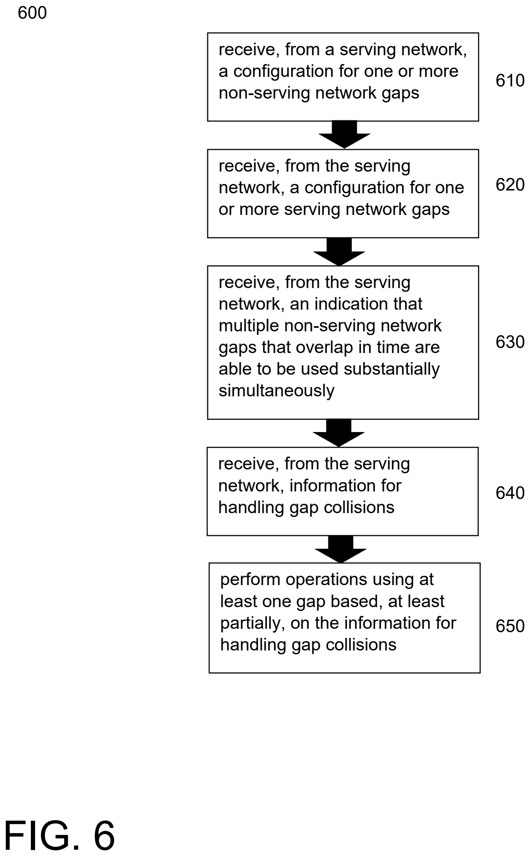

FIG. 6 illustrates the potential steps of an example method 600. The example method 600 may include: receiving, from a serving network, a configuration for one or more non-serving network gaps, 610; receiving, from the serving network, a configuration for one or more serving network gaps, 620; receiving, from the serving network, an indication that multiple non-serving network gaps that overlap in time are able to be used substantially simultaneously, 630; receiving, from the serving network, information for handling gap collisions, 640; and performing operations using at least one gap based, at least partially, on the information for handling gap collisions, 650. The example method 600 may be performed, for example, with a UE. The information for handling gap collisions may comprise an indication to use gap group priorities for handling gap collisions. Alternatively, the information for handling gap collisions may comprise an indication to at least one of: use at least one non-serving network gap and drop at least one serving network gap for performing operations during a gap collision, use the at least one serving network gap and drop the at least one non-serving network gap for performing operations during the gap collision, or use the at least one non-serving network gap and the at least one serving network gap for performing operations during the gap collision.

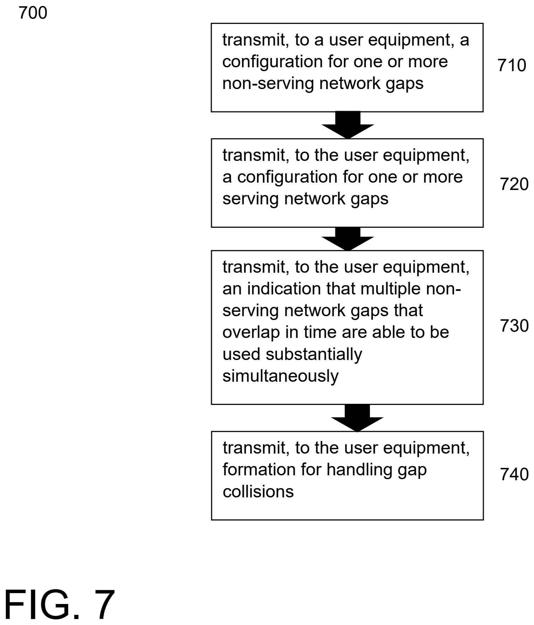

FIG. 7 illustrates the potential steps of an example method 700. The example method 700 may include: transmitting, to a user equipment, a configuration for one or more non-serving network gaps, 710; transmitting, to the user equipment, a configuration for one or more serving network gaps, 720; transmitting, to the user equipment, an indication that multiple non-serving network gaps that overlap in time are able to be used substantially simultaneously, 730; and transmitting, to the user equipment, formation for handling gap collisions, 740. The example method 700 may be performed, for example, with a base station, a network node, a network, an eNB, a gNB, a cell, a serving cell, a non-serving cell, a neighboring cell, etc. The information for handling gap collisions may comprise an indication to use gap group priorities for handling gap collisions. Alternatively, the information for handling gap collisions may comprise an indication to at least one of: use at least one non-serving network gap and drop at least one serving network gap for performing operations during a gap collision, use the at least one serving network gap and drop the at least one non-serving network gap for performing operations during the gap collision, or use the at least one non-serving network gap and the at least one serving network gap for performing operations during the gap collision.

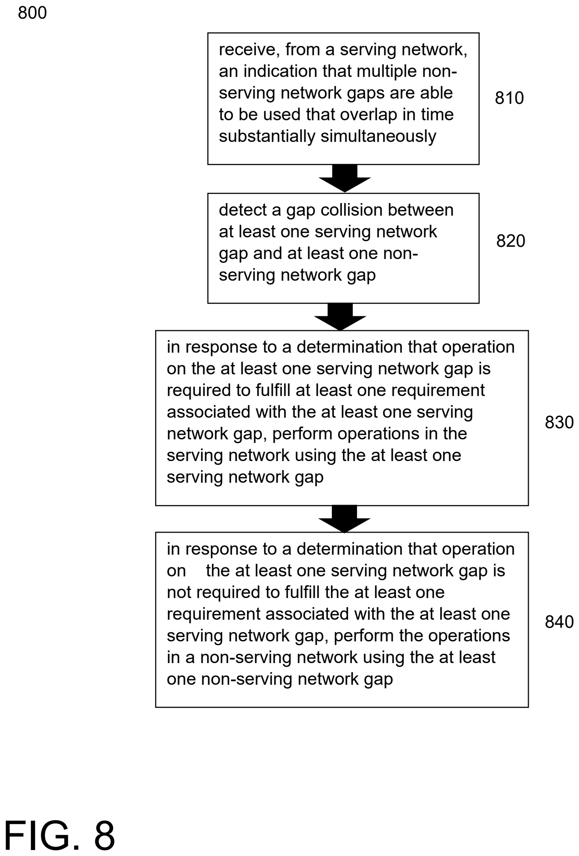

FIG. 8 illustrates the potential steps of an example method 800. The example method 800 may include: receiving, from a serving network, an indication that multiple non-serving network gaps that overlap in time are able to be used substantially simultaneously, 810; detecting a gap collision between at least one serving network gap and at least one non-serving network gap, 820; in response to a determination that operation on the at least one serving network gap is required to fulfill at least one requirement associated with the at least one serving network gap, performing operations in the serving network using the at least one serving network gap, 830; and in response to a determination that operation on the at least one serving network gap is not required to fulfill the at least one requirement associated with the at least one serving network gap, performing operations on in a non-serving network using the at least one non-serving network gap, 840. The example method 800 may be performed, for example, with a UE.

In accordance with one example embodiment, an apparatus may comprise: at least one processor; and at least one memory storing instructions that, when executed by the at least one processor, cause the apparatus at least to: receive, from a serving network, an indication that multiple non-serving network gaps that overlap in time are able to be used substantially simultaneously; detect a gap collision between at least one serving network gap and at least one non-serving network gap; in response to a determination that operation on the at least one serving network gap is required to fulfill at least one requirement associated with the at least one serving network gap, perform operations in the serving network using the at least one serving network gap; and in response to a determination that operation on the at least one serving network gap is not required to fulfill the at least one requirement associated with the at least one serving network gap, perform the operations in a non-serving network using the at least one non-serving network gap.

Performing the operations in the serving network may comprise the example apparatus being further configured to: drop the at least one non-serving network gap.

Performing the operations in the non-serving network may comprise the example apparatus being further configured to: drop the at least one serving network gap.

The at least one requirement may comprise at least one requirement for performing at least one positioning measurement.

The example apparatus may comprise a smartphone device.

A user equipment may comprise the example apparatus.

A device may comprise the example apparatus.

In accordance with one aspect, an example method may be provided comprising: receiving, with a user equipment from a serving network, an indication that multiple non-serving network gaps that overlap in time are able to be used substantially simultaneously; detecting a gap collision between at least one serving network gap and at least one non-serving network gap; in response to a determination that operation on the at least one serving network gap is required to fulfill at least one requirement associated with the at least one serving network gap, performing operations in the serving network using the at least one serving network gap; and in response to a determination that operation on the at least one serving network gap is not required to fulfill the at least one requirement associated with the at least one serving network gap, performing the operations in a non-serving network using the at least one non-serving network gap.

The performing of the operations in the serving network may comprise: dropping the at least one non-serving network gap.

The performing of the operations in the non-serving network may comprise: dropping the at least one serving network gap.

The at least one requirement may comprise at least one requirement for performing at least one positioning measurement.

The user equipment may comprise a smartphone device.

In accordance with one example embodiment, an apparatus comprising: at least one processor; and at least one non-transitory memory storing instructions that, when executed by the at least one processor, cause the apparatus at least to perform a method according to any of the foregoing.

In accordance with one example embodiment, an apparatus may comprise: circuitry configured to perform: receiving, from a serving network, an indication that multiple non-serving network gaps that overlap in time are able to be used substantially simultaneously; circuitry configured to perform: detecting a gap collision between at least one serving network gap and at least one non-serving network gap; circuitry configured to perform: in response to a determination that operation on the at least one serving network gap is required to fulfill at least one requirement associated with the at least one serving network gap, performing operations in the serving network using the at least one serving network gap; and circuitry configured to perform: in response to a determination that operation on the at least one serving network gap is not required to fulfill the at least one requirement associated with the at least one serving network gap, performing the operations in a non-serving network using the at least one non-serving network gap.

In accordance with one example embodiment, an apparatus may comprise: processing circuitry; memory circuitry including computer program code, the memory circuitry and the computer program code configured to, with the processing circuitry, enable the apparatus to: receive, from a serving network, an indication that multiple non-serving network gaps that overlap in time are able to be used substantially simultaneously; detect a gap collision between at least one serving network gap and at least one non-serving network gap; in response to a determination that operation on the at least one serving network gap is required to fulfill at least one requirement associated with the at least one serving network gap, perform operations in the serving network using the at least one serving network gap; and in response to a determination that operation on the at least one serving network gap is not required to fulfill the at least one requirement associated with the at least one serving network gap, perform the operations in a non-serving network using the at least one non-serving network gap.

As used in this application, the term "circuitry" or "means" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for: receiving, from a serving network, an indication that multiple non-serving network gaps that overlap in time are able to be used substantially simultaneously; detecting a gap collision between at least one serving network gap and at least one non-serving network gap; in response to a determination that operation on the at least one serving network gap is required to fulfill at least one requirement associated with the at least one serving network gap, performing operations in the serving network using the at least one serving network gap; and in response to a determination that operation on the at least one serving network gap is not required to fulfill the at least one requirement associated with the at least one serving network gap, performing the operations in a non-serving network using the at least one non-serving network gap.

The means configured for performing the operations in the serving network may be configured for: dropping the at least one non-serving network gap.

The means configured for performing the operations in the non-serving network may comprise means configured for: dropping the at least one serving network gap.

The at least one requirement may comprise at least one requirement for performing at least one positioning measurement.

The apparatus may comprise a smartphone device.

A user equipment may comprise the apparatus.

A device may comprise the apparatus.

A processor, memory, and/or example algorithms (which may be encoded as instructions, program, or code) may be provided as example means for providing or causing performance of operation.

In accordance with one example embodiment, a non-transitory computer-readable medium comprising instructions stored thereon which, when executed with at least one processor, cause the at least one processor to: cause receiving, from a serving network, of an indication that multiple non-serving network gaps that overlap in time are able to be used substantially simultaneously; detect a gap collision between at least one serving network gap and at least one non-serving network gap; in response to a determination that operation on the at least one serving network gap is required to fulfill at least one requirement associated with the at least one serving network gap, perform operations in the serving network using the at least one serving network gap; and in response to a determination that operation on the at least one serving network gap is not required to fulfill the at least one requirement associated with the at least one serving network gap, perform the operations in a non-serving network using the at least one non-serving network gap.

In accordance with one example embodiment, a non-transitory computer-readable medium comprising program instructions stored thereon for performing at least the following: causing receiving, from a serving network, of an indication that multiple non-serving network gaps that overlap in time are able to be used substantially simultaneously; detecting a gap collision between at least one serving network gap and at least one non-serving network gap; in response to a determination that operation on the at least one serving network gap is required to fulfill at least one requirement associated with the at least one serving network gap, performing operations in the serving network using the at least one serving network gap; and in response to a determination that operation on the at least one serving network gap is not required to fulfill the at least one requirement associated with the at least one serving network gap, performing the operations in a non-serving network using the at least one non-serving network gap.

In accordance with another example embodiment, a non-transitory program storage device readable by a machine may be provided, tangibly embodying instructions executable by the machine for performing operations, the operations comprising: causing receiving, from a serving network, of an indication that multiple non-serving network gaps that overlap in time are able to be used substantially simultaneously; detecting a gap collision between at least one serving network gap and at least one non-serving network gap; in response to a determination that operation on the at least one serving network gap is required to fulfill at least one requirement associated with the at least one serving network gap, performing operations in the serving network using the at least one serving network gap; and in response to a determination that operation on the at least one serving network gap is not required to fulfill the at least one requirement associated with the at least one serving network gap, performing the operations in a non-serving network using the at least one non-serving network gap.

In accordance with another example embodiment, a non-transitory computer-readable medium comprising instructions that, when executed by an apparatus, cause the apparatus to perform at least the following: causing receiving, from a serving network, of an indication that multiple non-serving network gaps that overlap in time are able to be used substantially simultaneously; detecting a gap collision between at least one serving network gap and at least one non-serving network gap; in response to a determination that operation on the at least one serving network gap is required to fulfill at least one requirement associated with the at least one serving network gap, performing operations in the serving network using the at least one serving network gap; and in response to a determination that operation on the at least one serving network gap is not required to fulfill the at least one requirement associated with the at least one serving network gap, performing the operations in a non-serving network using the at least one non-serving network gap.

A computer implemented system comprising: at least one processor and at least one non-transitory memory storing instructions that, when executed by the at least one processor, cause the system at least to perform: causing receiving, from a serving network, of an indication that multiple non-serving network gaps that overlap in time are able to be used substantially simultaneously; detecting a gap collision between at least one serving network gap and at least one non-serving network gap; in response to a determination that operation on the at least one serving network gap is required to fulfill at least one requirement associated with the at least one serving network gap, performing operations in the serving network using the at least one serving network gap; and in response to a determination that operation on the at least one serving network gap is not required to fulfill the at least one requirement associated with the at least one serving network gap, performing the operations in a non-serving network using the at least one non-serving network gap.

A computer implemented system comprising: means for causing receiving, from a serving network, of an indication that multiple non-serving network gaps that overlap in time are able to be used substantially simultaneously; means for detecting a gap collision between at least one serving network gap and at least one non-serving network gap; means for in response to a determination that operation on the at least one serving network gap is required to fulfill at least one requirement associated with the at least one serving network gap, performing operations in the serving network using the at least one serving network gap; and means for in response to a determination that operation on the at least one serving network gap is not required to fulfill the at least one requirement associated with the at least one serving network gap, performing the operations in a non-serving network using the at least one non-serving network gap.

In accordance with one example embodiment, an apparatus may comprise: at least one processor; and at least one memory storing instructions that, when executed by the at least one processor, cause the apparatus at least to: receive, from a serving network, a configuration for one or more non-serving network gaps; receive, from the serving network, a configuration for one or more serving network gaps; receive, from the serving network, an indication that multiple non-serving network gaps that overlap in time are able to be used substantially simultaneously; receive, from the serving network, information for handling gap collisions; and perform operations using at least one gap based, at least partially, on the information for handling gap collisions.

The information for handling gap collisions may comprise an indication to use gap group priorities for handling gap collisions.

Performing the operations using the at least one gap may comprise the example apparatus being further configured to: compare at least one priority for the one or more non-serving network gaps, and at least one priority for the one or more serving network gaps; and determine the gap for performing the operations based, at least partially, on a result of the comparison.

The at least one priority for the one or more non-serving network gaps may comprise a priority for a group of the one or more non-serving network gaps.

The example apparatus may be further configured to: determine the priority for the group of non-serving network gaps based, at least partially, on the indication to use gap group priorities for handling gap collisions.

The priority for the group of non-serving network gaps may comprise at least one of: a highest priority associated with one of the group of non-serving network gaps, a lowest priority associated with one of the group of non-serving network gaps, or a network assigned priority for the group of non-serving network gaps.

The indication to use gap group priorities for handling gap collisions may comprise at least one of: an indication to use a highest priority associated with one of the group of non-serving network gaps as the priority for the group of non-serving network gaps, an indication to use a lowest priority associated with one of the group of non-serving network gaps as the priority for the group of non-serving network gaps, or an indication of the priority for the group of non-serving network gaps.

The at least one priority for the one or more serving network gaps may comprise a highest priority of priorities respectively associated with the one or more serving network gaps.

The at least one priority for the one or more serving network gaps may comprise a priority for a group of the one or more serving network gaps.

The example apparatus may be further configured to: determine the priority for the group of serving network gaps based, at least partially, on the indication to use gap group priorities for handling gap collisions.

The priority for the group of serving network gaps may comprise at least one of: a highest priority associated with one of the group of serving network gaps, a lowest priority associated with one of the group of serving network gaps, or a network assigned priority for the group of serving network gaps.

The indication to use gap group priorities for handling gap collisions may comprise at least one of: an indication to use a highest priority associated with one of the group of serving network gaps as the priority for the group of serving network gaps, an indication to use a lowest priority associated with one of the group of serving network gaps as the priority for the group of serving network gaps, or an indication of the priority for the group of serving network gaps.

The at least one priority for the one or more non-serving network gaps may comprise a highest priority of priorities respectively associated with the one or more non-serving network gaps.

The operations may be performed in a non-serving network in response to the at least one priority for the one or more non-serving network gaps being greater than the at least one priority for the one or more serving network gaps, wherein the operations may be performed during at least one of the one or more non-serving network gaps.

The operations may be performed in the serving network in response to the at least one priority for the one or more non-serving network gaps being less than the at least one priority for the one or more serving network gaps, wherein the operations may be performed during at least one of the one or more serving network gaps.

Performing the operations may comprise the example apparatus being further configured to: use a gap of one of: the one or more non-serving network gaps, or the one or more serving network gaps; and drop a gap of another of: the one or more non-serving network gaps, or the one or more serving network gaps in response to an at least partial overlap between the used gap and the dropped gap.

The information for handling gap collisions may comprise an indication to at least one of: use at least one non-serving network gap and drop at least one serving network gap for performing the operations during a gap collision, use the at least one serving network gap and drop the at least one non-serving network gap for performing operations during the gap collision, or use the at least one non-serving network gap and the at least one serving network gap for performing the operations during the gap collision.

The information for handling gap collisions may be received with the indication that multiple non-serving network gaps that overlap in time are able to be used substantially simultaneously.

In accordance with one aspect, an example method may be provided comprising: receiving, with a user equipment from a serving network, a configuration for one or more non-serving network gaps; receiving, from the serving network, a configuration for one or more serving network gaps; receiving, from the serving network, an indication that multiple non-serving network gaps that overlap in time are able to be used substantially simultaneously; receiving, from the serving network, information for handling gap collisions; and performing operations using at least one gap based, at least partially, on the information for handling gap collisions.

The information for handling gap collisions may comprise an indication to use gap group priorities for handling gap collisions.

The performing of the operations using the at least one gap may comprise: comparing at least one priority for the one or more non-serving network gaps, and at least one priority for the one or more serving network gaps; and determining the gap for performing the operations based, at least partially, on a result of the comparison.

The at least one priority for the one or more non-serving network gaps may comprise a priority for a group of the one or more non-serving network gaps.

The example method may further comprise: determining the priority for the group of non-serving network gaps based, at least partially, on the indication to use gap group priorities for handling gap collisions.

The priority for the group of non-serving network gaps may comprise at least one of: a highest priority associated with one of the group of non-serving network gaps, a lowest priority associated with one of the group of non-serving network gaps, or a network assigned priority for the group of non-serving network gaps.

The indication to use gap group priorities for handling gap collisions may comprise at least one of: an indication to use a highest priority associated with one of the group of non-serving network gaps as the priority for the group of non-serving network gaps, an indication to use a lowest priority associated with one of the group of non-serving network gaps as the priority for the group of non-serving network gaps, or an indication of the priority for the group of non-serving network gaps.

The at least one priority for the one or more serving network gaps may comprise a highest priority of priorities respectively associated with the one or more serving network gaps.

The at least one priority for the one or more serving network gaps may comprise a priority for a group of the one or more serving network gaps.

The example method may further comprise: determining the priority for the group of serving network gaps based, at least partially, on the indication to use gap group priorities for handling gap collisions.

The priority for the group of serving network gaps may comprise at least one of: a highest priority associated with one of the group of serving network gaps, a lowest priority associated with one of the group of serving network gaps, or a network assigned priority for the group of serving network gaps.

The indication to use gap group priorities for handling gap collisions may comprise at least one of: an indication to use a highest priority associated with one of the group of serving network gaps as the priority for the group of serving network gaps, an indication to use a lowest priority associated with one of the group of serving network gaps as the priority for the group of serving network gaps, or an indication of the priority for the group of serving network gaps.

The at least one priority for the one or more non-serving network gaps may comprise a highest priority of priorities respectively associated with the one or more non-serving network gaps.

The operations may be performed in a non-serving network in response to the at least one priority for the one or more non-serving network gaps being greater than the at least one priority for the one or more serving network gaps, wherein the operations may be performed during at least one of the one or more non-serving network gaps.

The operations may be performed in the serving network in response to the at least one priority for the one or more non-serving network gaps being less than the at least one priority for the one or more serving network gaps, wherein the operations may be performed during at least one of the one or more serving network gaps.

The performing of the operations may comprise: using a gap of one of: the one or more non-serving network gaps, or the one or more serving network gaps; and dropping a gap of another of: the one or more non-serving network gaps, or the one or more serving network gaps in response to an at least partial overlap between the used gap and the dropped gap.

The information for handling gap collisions may comprise an indication to at least one of: use at least one non-serving network gap and drop at least one serving network gap for performing the operations during a gap collision, use the at least one serving network gap and drop the at least one non-serving network gap for performing the operations during the gap collision, or use the at least one non-serving network gap and the at least one serving network gap for performing the operations during the gap collision.

The information for handling gap collisions may be received with the indication that multiple non-serving network gaps that overlap in time are able to be used substantially simultaneously.

In accordance with one example embodiment, an apparatus comprising: at least one processor; and at least one non-transitory memory storing instructions that, when executed by the at least one processor, cause the apparatus at least to perform a method according to any of the foregoing.

In accordance with one example embodiment, an apparatus may comprise: circuitry configured to perform: receiving, from a serving network, a configuration for one or more non-serving network gaps; circuitry configured to perform: receiving, from the serving network, a configuration for one or more serving network gaps; circuitry configured to perform: receiving, from the serving network, an indication that multiple non-serving network gaps that overlap in time are able to be used substantially simultaneously; circuitry configured to perform: receiving, from the serving network, information for handling gap collisions; and circuitry configured to perform: performing operations using at least one gap based, at least partially, on the information for handling gap collisions.

In accordance with one example embodiment, an apparatus may comprise: processing circuitry; memory circuitry including computer program code, the memory circuitry and the computer program code configured to, with the processing circuitry, enable the apparatus to: receive, from a serving network, a configuration for one or more non-serving network gaps; receive, from the serving network, a configuration for one or more serving network gaps; receive, from the serving network, an indication that multiple non-serving network gaps that overlap in time are able to be used substantially simultaneously; receive, from the serving network, information for handling gap collisions; and perform operations using at least one gap based, at least partially, on the information for handling gap collisions.

In accordance with one example embodiment, an apparatus may comprise means for: receiving, from a serving network, a configuration for one or more non-serving network gaps; receiving, from the serving network, a configuration for one or more serving network gaps; receiving, from the serving network, an indication that multiple non-serving network gaps that overlap in time are able to be used substantially simultaneously; receiving, from the serving network, information for handling gap collisions; and performing operations using at least one gap based, at least partially, on the information for handling gap collisions.

The information for handling gap collisions may comprise an indication to use gap group priorities for handling gap collisions.

The means configured for performing the operations using the at least one gap may comprise means configured for: comparing at least one priority for the one or more non-serving network gaps, and at least one priority for the one or more serving network gaps; and determining the gap for performing the operations based, at least partially, on a result of the comparison.

The at least one priority for the one or more non-serving network gaps may comprise a priority for a group of the one or more non-serving network gaps.

The means may be further configured for: determining the priority for the group of non-serving network gaps based, at least partially, on the indication to use gap group priorities for handling gap collisions.

The priority for the group of non-serving network gaps may comprise at least one of: a highest priority associated with one of the group of non-serving network gaps, a lowest priority associated with one of the group of non-serving network gaps, or a network assigned priority for the group of non-serving network gaps.

The indication to use gap group priorities for handling gap collisions may comprise at least one of: an indication to use a highest priority associated with one of the group of non-serving network gaps as the priority for the group of non-serving network gaps, an indication to use a lowest priority associated with one of the group of non-serving network gaps as the priority for the group of non-serving network gaps, or an indication of the priority for the group of non-serving network gaps.

The at least one priority for the one or more serving network gaps may comprise a highest priority of priorities respectively associated with the one or more serving network gaps.

The at least one priority for the one or more serving network gaps may comprise a priority for a group of the one or more serving network gaps.

The means may be further configured for: determining the priority for the group of serving network gaps based, at least partially, on the indication to use gap group priorities for handling gap collisions.

The priority for the group of serving network gaps may comprise at least one of: a highest priority associated with one of the group of serving network gaps, a lowest priority associated with one of the group of serving network gaps, or a network assigned priority for the group of serving network gaps.

The indication to use gap group priorities for handling gap collisions may comprise at least one of: an indication to use a highest priority associated with one of the group of serving network gaps as the priority for the group of serving network gaps, an indication to use a lowest priority associated with one of the group of serving network gaps as the priority for the group of serving network gaps, or an indication of the priority for the group of serving network gaps.

The at least one priority for the one or more non-serving network gaps may comprise a highest priority of priorities respectively associated with the one or more non-serving network gaps.

The operations may be performed in a non-serving network in response to the at least one priority for the one or more non-serving network gaps being greater than the at least one priority for the one or more serving network gaps, wherein the operations may be performed during at least one of the one or more non-serving network gaps.

The operations may be performed in the serving network in response to the at least one priority for the one or more non-serving network gaps being less than the at least one priority for the one or more serving network gaps, wherein the operations may be performed during at least one of the one or more serving network gaps.

The means configured for performing the operations may comprise means configured for: using a gap of one of: the one or more non-serving network gaps, or the one or more serving network gaps; and dropping a gap of another of: the one or more non-serving network gaps, or the one or more serving network gaps in response to an at least partial overlap between the used gap and the dropped gap.

The information for handling gap collisions may comprise an indication to at least one of: use at least one non-serving network gap and drop at least one serving network gap for performing the operations during a gap collision, use the at least one serving network gap and drop the at least one non-serving network gap for performing operations during the gap collision, or use the at least one non-serving network gap and the at least one serving network gap for performing the operations during the gap collision.

The information for handling gap collisions may be received with the indication that multiple non-serving network gaps that overlap in time are able to be used substantially simultaneously.

In accordance with one example embodiment, a non-transitory computer-readable medium comprising instructions stored thereon which, when executed with at least one processor, cause the at least one processor to: cause receiving, from a serving network, of a configuration for one or more non-serving network gaps; cause receiving, from the serving network, of a configuration for one or more serving network gaps; cause receiving, from the serving network, of an indication that multiple non-serving network gaps that overlap in time are able to be used substantially simultaneously; cause receiving, from the serving network, of information for handling gap collisions; and perform operations using at least one gap based, at least partially, on the information for handling gap collisions.

In accordance with one example embodiment, a non-transitory computer-readable medium comprising program instructions stored thereon for performing at least the following: causing receiving, from a serving network, of a configuration for one or more non-serving network gaps; causing receiving, from the serving network, of a configuration for one or more serving network gaps; causing receiving, from the serving network, of an indication that multiple non-serving network gaps that overlap in time are able to be used substantially simultaneously; causing receiving, from the serving network, of information for handling gap collisions; and performing operations using at least one gap based, at least partially, on the information for handling gap collisions.

In accordance with another example embodiment, a non-transitory program storage device readable by a machine may be provided, tangibly embodying instructions executable by the machine for performing operations, the operations comprising: causing receiving, from a serving network, of a configuration for one or more non-serving network gaps; causing receiving, from the serving network, of a configuration for one or more serving network gaps; causing receiving, from the serving network, of an indication that multiple non-serving network gaps that overlap in time are able to be used substantially simultaneously; causing receiving, from the serving network, of information for handling gap collisions; and performing operations using at least one gap based, at least partially, on the information for handling gap collisions.

In accordance with another example embodiment, a non-transitory computer-readable medium comprising instructions that, when executed by an apparatus, cause the apparatus to perform at least the following: causing receiving, from a serving network, of a configuration for one or more non-serving network gaps; causing receiving, from the serving network, of a configuration for one or more serving network gaps; causing receiving, from the serving network, of an indication that multiple non-serving network gaps that overlap in time are able to be used substantially simultaneously; causing receiving, from the serving network, of information for handling gap collisions; and performing operations using at least one gap based, at least partially, on the information for handling gap collisions.

A computer implemented system comprising: at least one processor and at least one non-transitory memory storing instructions that, when executed by the at least one processor, cause the system at least to perform: causing receiving, from a serving network, of a configuration for one or more non-serving network gaps; causing receiving, from the serving network, of a configuration for one or more serving network gaps; causing receiving, from the serving network, of an indication that multiple non-serving network gaps that overlap in time are able to be used substantially simultaneously; causing receiving, from the serving network, of information for handling gap collisions; and performing operations using at least one gap based, at least partially, on the information for handling gap collisions.

A computer implemented system comprising: means for causing receiving, from a serving network, of a configuration for one or more non-serving network gaps; means for causing receiving, from the serving network, of a configuration for one or more serving network gaps; means for causing receiving, from the serving network, of an indication that multiple non-serving network gaps that overlap in time are able to be used substantially simultaneously; means for causing receiving, from the serving network, of information for handling gap collisions; and means for performing operations using at least one gap based, at least partially, on the information for handling gap collisions.

In accordance with one example embodiment, an apparatus may comprise: at least one processor; and at least one memory storing instructions that, when executed by the at least one processor, cause the apparatus at least to: transmit, to a user equipment, a configuration for one or more non-serving network gaps; transmit, to the user equipment, a configuration for one or more serving network gaps; transmit, to the user equipment, an indication that multiple non-serving network gaps that overlap in time are able to be used substantially simultaneously; and transmit, to the user equipment, information for handling gap collisions.

The information for handling gap collisions may comprise an indication to use gap group priorities for handling gap collisions.

The indication to use gap group priorities for handling measurement gap collisions may comprise at least one of: an indication to use a highest priority associated with one of a group of non-serving network gaps as a priority for the group of non-serving network gaps, an indication to use a lowest priority associated with one of the group of non-serving network gaps as the priority for the group of non-serving network gaps, or an indication of the priority for the group of non-serving network gaps.

The indication to use gap group priorities for handling measurement gap collisions may comprise at least one of: an indication to use a highest priority associated with one of a group of serving network gaps as a priority for the group of serving network gaps, an indication to use a lowest priority associated with one of the group of serving network gaps as the priority for the group of serving network gaps, or an indication of the priority for the group of serving network gaps.

The information for handling gap collisions may comprise an indication to at least one of: use at least one non-serving network gap and drop at least one serving network gap for performing the operations during a gap collision, use the at least one serving network gap and drop the at least one non-serving network gap for performing the operations during the gap collision, or use the at least one non-serving network gap and the at least one serving network gap for performing the operations during the gap collision.

The information for handling gap collisions may be transmitted with the indication that multiple non-serving network gaps that overlap in time are able to be used substantially simultaneously.

In accordance with one aspect, an example method may be provided comprising: transmitting, with a network node to a user equipment, a configuration for one or more non-serving network gaps; transmitting, to the user equipment, a configuration for one or more serving network gaps; transmitting, to the user equipment, an indication that multiple non-serving network gaps that overlap in time are able to be used substantially simultaneously; and transmitting, to the user equipment, information for handling gap collisions.

The information for handling gap collisions may comprise an indication to use gap group priorities for handling gap collisions.

The indication to use gap group priorities for handling measurement gap collisions may comprise at least one of: an indication to use a highest priority associated with one of a group of non-serving network gaps as a priority for the group of non-serving network gaps, an indication to use a lowest priority associated with one of the group of non-serving network gaps as the priority for the group of non-serving network gaps, or an indication of the priority for the group of non-serving network gaps.

The indication to use gap group priorities for handling measurement gap collisions may comprise at least one of: an indication to use a highest priority associated with one of a group of serving network gaps as a priority for the group of serving network gaps, an indication to use a lowest priority associated with one of the group of serving network gaps as the priority for the group of serving network gaps, or an indication of the priority for the group of serving network gaps.

The information for handling gap collisions may comprise an indication to at least one of: use at least one non-serving network gap and drop at least one serving network gap for performing the operations during a gap collision, use the at least one serving network gap and drop the at least one non-serving network gap for performing the operations during the gap collision, or use the at least one non-serving network gap and the at least one serving network gap for performing the operations during the gap collision.

The information for handling gap collisions maybe transmitted with the indication that multiple non-serving network gaps that overlap in time are able to be used substantially simultaneously.

In accordance with one example embodiment, an apparatus comprising: at least one processor; and at least one non-transitory memory storing instructions that, when executed by the at least one processor, cause the apparatus at least to perform a method according to any of the foregoing.

In accordance with one example embodiment, an apparatus may comprise: circuitry configured to perform: transmitting, to a user equipment, a configuration for one or more non-serving network gaps; circuitry configured to perform: transmitting, to the user equipment, a configuration for one or more serving network gaps; circuitry configured to perform: transmitting, to the user equipment, an indication that multiple non-serving network gaps that overlap in time are able to be used substantially simultaneously; and circuitry configured to perform: transmitting, to the user equipment, information for handling gap collisions.

In accordance with one example embodiment, an apparatus may comprise: processing circuitry; memory circuitry including computer program code, the memory circuitry and the computer program code configured to, with the processing circuitry, enable the apparatus to: transmit, to a user equipment, a configuration for one or more non-serving network gaps; transmit, to the user equipment, a configuration for one or more serving network gaps; transmit, to the user equipment, an indication that multiple non-serving network gaps that overlap in time are able to be used substantially simultaneously; and transmit, to the user equipment, information for handling gap collisions.

In accordance with one example embodiment, an apparatus may comprise means for: transmitting, to a user equipment, a configuration for one or more non-serving network gaps; transmitting, to the user equipment, a configuration for one or more serving network gaps; transmitting, to the user equipment, an indication that multiple non-serving network gaps that overlap in time are able to be used substantially simultaneously; and transmitting, to the user equipment, information for handling gap collisions.

The information for handling gap collisions may comprise an indication to use gap group priorities for handling gap collisions.

The indication to use gap group priorities for handling measurement gap collisions may comprise at least one of: an indication to use a highest priority associated with one of a group of non-serving network gaps as a priority for the group of non-serving network gaps, an indication to use a lowest priority associated with one of the group of non-serving network gaps as the priority for the group of non-serving network gaps, or an indication of the priority for the group of non-serving network gaps.

The indication to use gap group priorities for handling measurement gap collisions may comprise at least one of: an indication to use a highest priority associated with one of a group of serving network gaps as a priority for the group of serving network gaps, an indication to use a lowest priority associated with one of the group of serving network gaps as the priority for the group of serving network gaps, or an indication of the priority for the group of serving network gaps.

The information for handling gap collisions may comprise an indication to at least one of: use at least one non-serving network gap and drop at least one serving network gap for performing the operations during a gap collision, use the at least one serving network gap and drop the at least one non-serving network gap for performing the operations during the gap collision, or use the at least one non-serving network gap and the at least one serving network gap for performing the operations during the gap collision.

The information for handling gap collisions may be transmitted with the indication that multiple non-serving network gaps that overlap in time are able to be used substantially simultaneously.

In accordance with one example embodiment, a non-transitory computer-readable medium comprising instructions stored thereon which, when executed with at least one processor, cause the at least one processor to: cause transmitting, to a user equipment, of a configuration for one or more non-serving network gaps; cause transmitting, to the user equipment, of a configuration for one or more serving network gaps; cause transmitting, to the user equipment, of an indication that multiple non-serving network gaps that overlap in time are able to be used substantially simultaneously; and cause transmitting, to the user equipment, of information for handling gap collisions.

In accordance with one example embodiment, a non-transitory computer-readable medium comprising program instructions stored thereon for performing at least the following: causing transmitting, to a user equipment, of a configuration for one or more non-serving network gaps; causing transmitting, to the user equipment, of a configuration for one or more serving network gaps; causing transmitting, to the user equipment, of an indication that multiple non-serving network gaps that overlap in time are able to be used substantially simultaneously; and causing transmitting, to the user equipment, of information for handling gap collisions.

In accordance with another example embodiment, a non-transitory program storage device readable by a machine may be provided, tangibly embodying instructions executable by the machine for performing operations, the operations comprising: causing transmitting, to a user equipment, of a configuration for one or more non-serving network gaps; causing transmitting, to the user equipment, of a configuration for one or more serving network gaps; causing transmitting, to the user equipment, of an indication that multiple non-serving network gaps that overlap in time are able to be used substantially simultaneously; and causing transmitting, to the user equipment, of information for handling gap collisions.

In accordance with another example embodiment, a non-transitory computer-readable medium comprising instructions that, when executed by an apparatus, cause the apparatus to perform at least the following: causing transmitting, to a user equipment, of a configuration for one or more non-serving network gaps; causing transmitting, to the user equipment, of a configuration for one or more serving network gaps; causing transmitting, to the user equipment, of an indication that multiple non-serving network gaps that overlap in time are able to be used substantially simultaneously; and causing transmitting, to the user equipment, of information for handling gap collisions.

A computer implemented system comprising: at least one processor and at least one non-transitory memory storing instructions that, when executed by the at least one processor, cause the system at least to perform: causing transmitting, to a user equipment, of a configuration for one or more non-serving network gaps; causing transmitting, to the user equipment, of a configuration for one or more serving network gaps; causing transmitting, to the user equipment, of an indication that multiple non-serving network gaps that overlap in time are able to be used substantially simultaneously; and causing transmitting, to the user equipment, of information for handling gap collisions.

A computer implemented system comprising: means for causing transmitting, to a user equipment, of a configuration for one or more non-serving network gaps; means for causing transmitting, to the user equipment, of a configuration for one or more serving network gaps; means for causing transmitting, to the user equipment, of an indication that multiple non-serving network gaps that overlap in time are able to be used substantially simultaneously; and means for causing transmitting, to the user equipment, of information for handling gap collisions.

The term "non-transitory," as used herein, is a limitation of the medium itself (i.e. tangible, not a signal) as opposed to a limitation on data storage persistency (e.g., RAM vs. ROM).

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus of a user equipment, comprising means for:
receiving, from a serving network, a configuration for one or more Multiple Universal Subscriber Identity Module, MUSIM, gaps;
receiving, from the serving network, a configuration for one or more serving network gaps;
receiving, from the serving network, an indication that multiple MUSIM gaps that overlap in time are granted to be kept and used substantially simultaneously;
receiving, from the serving network, information for handling gap collisions; and
performing operations using at least one gap based, at least partially, on the information for handling gap collisions.

2. The apparatus of claim 1, wherein the information for handling gap collisions comprises an indication to use gap group priorities for handling gap collisions.

3. The apparatus of claim 1 or 2, wherein performing the operations using the at least one gap comprises:
comparing at least one priority for the one or more MUSIM gaps, and at least one priority for the one or more serving network gaps; and
determining the at least one gap for performing the operations based, at least partially, on a result of the comparison.

4. The apparatus of claim 3, wherein the at least one priority for the one or more MUSIM gaps comprises a priority for a group of the one or more MUSIM gaps.

5. The apparatus of claim 4, wherein the means are further configured to perform:
determining the priority for the group of MUSIM gaps based, at least partially, on an indication to use gap group priorities for handling gap collisions.

6. The apparatus of claim 4 or 5, wherein the priority for the group of MUSIM gaps comprises at least one of:
a highest priority associated with one of the group of MUSIM gaps,
a lowest priority associated with one of the group of MUSIM gaps, or
a network assigned priority for the group of MUSIM gaps.

7. The apparatus of any one of claims 4 through 6, wherein an indication to use gap group priorities for handling gap collisions comprises at least one of:
an indication to use a highest priority associated with one of the group of MUSIM gaps as the priority for the group of MUSIM gaps,
an indication to use a lowest priority associated with one of the group of MUSIM gaps as the priority for the group of MUSIM gaps, or
an indication of the priority for the group of MUSIM gaps.

8. The apparatus of any one of claims 1 through 7, wherein at least one priority for the one or more serving network gaps comprises a highest priority of priorities respectively associated with the one or more serving network gaps.

9. The apparatus of any one of claims 1 through 8, wherein the information for handling gap collisions comprises an indication to at least one of:
use at least one MUSIM gap and drop at least one serving network gap for performing the operations during a gap collision,
use the at least one serving network gap and drop the at least one MUSIM gap for performing the operations during the gap collision, or
use the at least one MUSIM gap and the at least one serving network gap for performing the operations during the gap collision.

10. A method comprising:
receiving, with a user equipment from a serving network, a configuration for one or more MUSIM gaps;
receiving, from the serving network, a configuration for one or more serving network gaps;
receiving, from the serving network, an indication that multiple MUSIM gaps that overlap in time are granted to be kept and used substantially simultaneously;
receiving, from the serving network, information for handling gap collisions; and
performing operations using at least one gap based, at least partially, on the information for handling gap collisions.

11. The method of claim 10, wherein the information for handling gap collisions comprises an indication to use gap group priorities for handling gap collisions.

12. The method of claim 10, wherein the performing the operations using at least one gap comprises:
comparing at least one priority for the one or more MUSIM gaps, and at least one priority for the one or more serving network gaps; and
determining the at least one gap for performing the operations based, at least partially, on a result of the comparison.

13. The method of claim 10, wherein at least one priority for the one or more serving network gaps comprises a highest priority of priorities respectively associated with the one or more serving network gaps.

14. The method of any one of claims 10 through 13, wherein the information for handling gap collisions comprises an indication to at least one of:
use at least one MUSIM gap and drop at least one serving network gap for performing the operations during a gap collision,
use the at least one serving network gap and drop the at least one MUSIM gap for performing the operations during the gap collision, or
use the at least one MUSIM gap and the at least one serving network gap for performing the operations during the gap collision.

15. An apparatus comprising means for:
transmitting, to a user equipment, a configuration for one or more MUSIM gaps;
transmitting, to the user equipment, a configuration for one or more serving network gaps;
transmitting, to the user equipment, an indication that multiple MUSIM gaps that overlap in time are granted to be kept and used substantially simultaneously; and
transmitting, to the user equipment, information for handling gap collisions.
